# EUROPEAN PATENT SPECIFICATION

(11) **EP 2 818 401 B1**
(45) Date of publication and mention of the grant of the patent: **27.03.2019**
(21) Application number: 14173520.9
(22) Date of filing: 23.06.2014
(51) Int. Cl.: B63H 21/30, F16F 15/173, F16F 15/12

(54) **AXIAL VIBRATION DAMPER ASSEMBLY AND ENGINE FOR SHIP INCLUDING THE SAME**
AXIALE SCHWINGUNGSDÄMPFERANORDNUNG UND MOTOR FÜR SCHIFFE DAMIT
ENSEMBLE AMORTISSEUR DE VIBRATIONS AXIALES ET MOTEUR DE NAVIRE COMPRENANT CELUI-CI

(30) Priority: 24.06.2013 KR 20130072478; 02.04.2014 KR 20140039616; 02.04.2014 KR 20140039568; 02.04.2014 KR 20140039617; 02.04.2014 KR 20140039567
(43) Date of publication of application: 31.12.2014
(73) Proprietor: Hyundai Heavy Industries Co., Ltd., Ulsan 682-792 (KR)
(72) Inventor: Lee, Chan-Hui, Ulsan (KR); Joo, Won-Ho, Ulsan (KR); Kim, Heui-Won, Ulsan (KR)
(74) Representative: Nederlandsch Octrooibureau

(56) References cited:
- WO-A1-96/16866
- DE-A1- 4 420 288
- GB-A- 1 016 914
- JP-A- 2003 184 774
- JP-A- 2008 232 037

## Description

### BACKGROUND

The present disclosure relates to an axial vibration damper and an engine for ships including the same, and more particularly, to an axial vibration damper having enhanced damping performance and an engine for ships including the same.

Recently, in order to increase fuel efficiency due an increases in oil prices, low-speed high-output main engines (large-sized diesel engines) have been developed, ship propeller diameters have been increased, and unsteady thrust force generated in ship propulsion shafting has been increased. Thus, vibrations have also increased, and in particular, axial vibrations, transmitted as they are to the hulls of ships, need to be reduced.

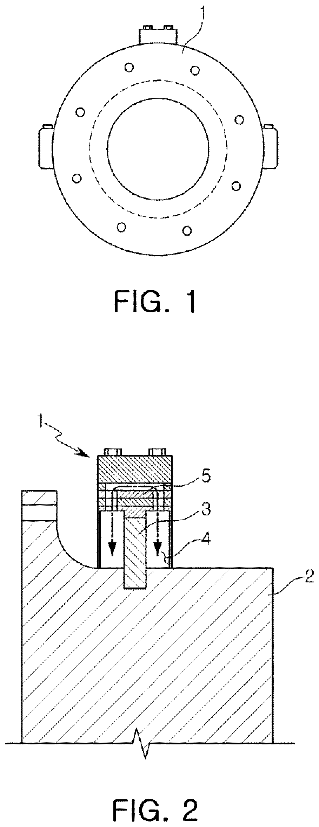

In order to dampen axial vibrations, as illustrated in FIGS. 1 and 2, a damper 1 is coupled to a front end of a crank shaft 2 forming part of an engine. A doughnut-shaped cam 3 is inserted into the middle of an end portion of the crank shaft 2 and moves together with the crank shaft 2 simultaneously.

Oil chambers 4 are formed on both sides of the cam 3. The oil chambers 4 communicate with an upper portion of the damper 1 to allow oil to move into or out of the respective oil chambers 4.

A plurality of thin plates 5 are laminated and coupled on a path along which oil flows in order to adjust a flow rate of oil. Through holes corresponding to positions of the oil chambers 4 are symmetrically formed in the thin plates 5. A single through hole is formed in a central portion of the uppermost thin plate 5, among the laminated thin plates 5, in which the oil chambers 4 communicate to allow internal oil to move in and out by pressure of the cam 3.

Thus, the crank shaft 2 is moved forwards and backwards according to driving of the engine and a propeller and the cam 3 is also moved together with the crank shaft 2 simultaneously. The cam 3 on the move pressurizes oil to make oil introduced to the opposite oil chamber 4. In this manner, unsteady thrust force is dampened, while changing a duration for which oil remains within the oil chamber 4, thus preventing transmission of axial vibrations to a deck house (or an accommodation area) of a vessel.

Improving dampening performance of axial vibration dampers is crucial.

DE 44 20 288 A1 discloses an axial vibration damper for the crank shaft of the engine of a ship. The crank shaft of the engine passes through a body unit of the damper, and has an annular cam portion. The body unit includes a pair of oil chambers in contact with both sides of the cam portion, the oil chambers having communicating holes connected to cap communicating holes of a cap part mounted on the body unit. The cap part comprises a lower frame coupled with the body unit and a cover to define an oil flow path between the cover and the lower frame.

JP 2008 232037 A discloses a same kind of axial vibration damper for a crank shaft of the engine of a ship.

### SUMMARY

An aspect of the present disclosure may provide an axial vibration damper in which a cross-sectional area and a gap on an oil movement path are easily adjusted, and an engine for a ship including the same.

An aspect of the present disclosure may also provide an axial vibration damper in which an oil movement path is maximally secured without altering dimensions of an outer portion of the axial vibration damper, thus having increased damping performance, and an engine for a ship including the same.

An aspect of the present disclosure may also provide an axial vibration damper capable of securing a minimal oil movement path in the event of a breakdown, and an engine for a ship including the same.

An aspect of the present disclosure may also provide an axial vibration damper assembly having enhanced damping performance by enhancing torsion damping performance, and an engine for a ship including the same.

According to an aspect of the present disclosure, an axial vibration damper may include: a body unit allowing a crank shaft, of an engine for a ship, having an annular cam portion, to penetrate therethrough, and including a pair of oil chambers in contact with both sides of the cam portion to accommodate oil therein and at least one communicating hole, respectively, formed at upper ends of the pair of oil chambers; a lower frame coupled to the top of the body unit and having cap communicating holes corresponding to the at least one communicating hole; and an upper cover coupled to an upper end of the lower frame and forming an oil communicating flow path together with the lower frame, wherein the cap communicating holes are connected to the communicating hole at a predetermined angle, characterized in that the lower frame comprises a socket unit including an installation portion formed therein in a through manner and a core unit having the cap communicating holes and installed on the installation portion.

A cross-sectional area of the installation portion may be increased upwardly.

A cross-sectional area of each of the cap communicating holes may be smaller than a cross-sectional area of the at least one communicating hole.

A cross-sectional area of each of the cap communicating hole may be equal to half a cross-sectional area of the communicating hole.

The axial vibration damper may further include: an oil seal positioned between an outer surface of the lower frame and an inner surface of the upper cover and preventing the leakage of oil.

The lower frame may have a step portion formed to be depressed in an upper end of the lower frame.

The step portion may include at least a portion of upper ends of the cap communicating holes.

The step portion may include the entirety of the upper ends of the cap communicating holes.

A plurality of step portions each connecting a pair of facing cap communicating holes may be formed.

The axial vibration damper may further include: an oil seal positioned between an outer surface of the lower frame and an inner surface of the upper cover and preventing the leakage of oil.

The upper cover may have a pair of first sloped surfaces formed at lower ends of both facing sides thereof at a predetermined angle, and the axial vibration damper may further include: a height adjusting member having a pair of height adjusting rods with second sloped surfaces corresponding to the pair of first sloped surfaces and adjusting a coupling height of the upper cover through a slidable movement.

The upper cover may have at least a pair of height adjusting protrusions formed to be protruded downwardly at lower ends of both facing sides thereof, and the axial vibration damper may further include: a height adjusting member have height adjusting rods each with at least one step portion that is in contact with the pair of height adjusting protrusions to adjust a coupling height of the upper cover through a slidable movement.

The height adjusting protrusions may be outwardly protruded from the sides of the upper cover.

The height adjusting protrusions may be formed as a plurality of pairs of height adjusting protrusions, and the height adjusting rods may have a plurality of step portions corresponding to the height adjusting protrusions.

The axial vibration damper may further include: an oil seal positioned between an outer surface of the lower frame and an inner surface of the upper cover and preventing the leakage of oil.

The axial vibration damper may further include: a crank shaft including an annular cam portion with a plurality of comb portions formed in a circumferential direction on both sides thereof.

The comb portions may be outwardly protruded protrusions.

The comb portions may be inwardly depressed recesses.

The comb portions may be radially formed.

Each of the comb portions may have any one of helical, spiral, and herringbone shapes.

The axial vibration damper may further include: the upper cover being movable outwardly or inwardly in a radial direction of the crank shaft along the lower frame.

According to another aspect of the present disclosure, an engine for a ship may include: a crank shaft rotating according to combustion of a heat engine and having an annular cam portion; and the axial vibration damper according to exemplary embodiments of the present disclosure.

### BRIEF DESCRIPTION OF DRAWINGS

The above and other aspects, features and other advantages of the present disclosure will be more clearly understood from the following detailed description taken in conjunction with the accompanying drawings, in which:
FIG. 1 is a front view of the related art axial vibration damper;
FIG. 2 is a partial cross-sectional view of the related art axial vibration damper according to an exemplary embodiment of the present disclosure;
FIG. 3 is a partial perspective view illustrating an engine for a ship including an axial vibration damper according to an exemplary embodiment of the present disclosure;
FIG. 4 is a partial cross-sectional view taken along line A-A' of FIG. 3;
FIG. 5 is an exploded perspective view of the axial vibration damper according to an exemplary embodiment of the present disclosure;
FIG. 6 is a partial cross-sectional view taken along line A-A' of FIG. 3 according to another exemplary embodiment of the present disclosure;
FIG. 7 is an exploded perspective view illustrating an axial vibration damper according to another exemplary embodiment of the present disclosure;
FIG. 8 is an exploded perspective view illustrating an axial vibration damper according to another exemplary embodiment of the present disclosure;
FIG. 9 is an exploded perspective view illustrating an axial vibration damper according to another exemplary embodiment of the present disclosure;
FIG. 10 is a partial perspective view illustrating an axial vibration damper according to another exemplary embodiment of the present disclosure;
FIG. 11 is an exploded perspective view illustrating an axial vibration damper according to another exemplary embodiment of the present disclosure;
FIG. 12 is a side view illustrating an axial vibration damper according to another exemplary embodiment of the present disclosure;
FIG. 13 is a partial perspective view illustrating an axial vibration damper according to another exemplary embodiment of the present disclosure;
FIG. 14 is an exploded perspective view illustrating an axial vibration damper according to another exemplary embodiment of the present disclosure;
FIG. 15 is a side view illustrating an axial vibration damper according to another exemplary embodiment of the present disclosure;
FIG.16 is a partial perspective view illustrating an axial vibration damper according to another exemplary embodiment of the present disclosure;
FIG. 17 is an exploded perspective view illustrating an axial vibration damper according to another exemplary embodiment of the present disclosure;
FIG. 18 is a side view illustrating an axial vibration damper according to another exemplary embodiment of the present disclosure;
FIG. 19 is an exploded perspective view illustrating an axial vibration damper according to another exemplary embodiment of the present disclosure;
FIG. 20 is a perspective view illustrating a crank shaft according to another exemplary embodiment of the present disclosure; and
FIGS. 21(a) through 21(d) are front views illustrating a crank shaft according to another exemplary embodiment of the present disclosure.

### DETAILED DESCRIPTION

Hereinafter, exemplary embodiments of the present disclosure will be described in detail with reference to the accompanying drawings.

The disclosure may, however, be exemplified in many different forms and should not be construed as being limited to the specific embodiments set forth herein. Rather, these embodiments are provided so that this disclosure will be thorough and complete, and will fully convey the scope of the disclosure to those skilled in the art.

In the drawings, the shapes and dimensions of elements may be exaggerated for clarity, and the same reference numerals will be used throughout to designate the same or like elements.

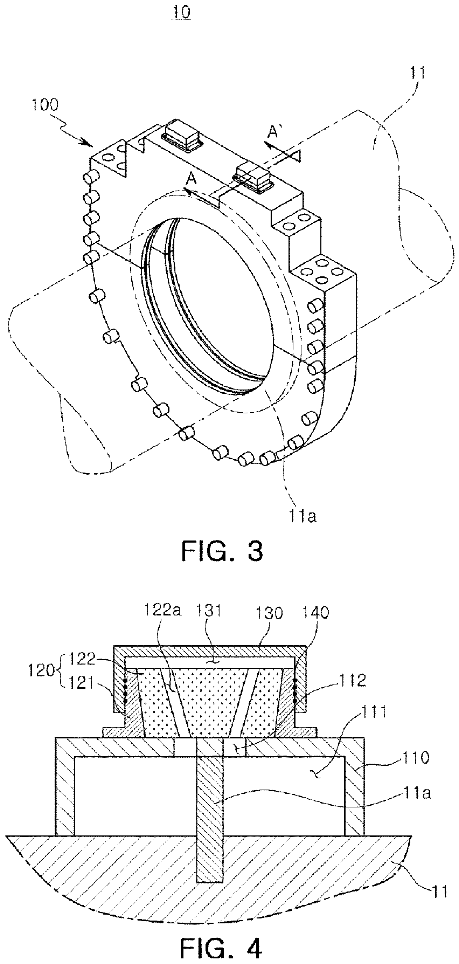

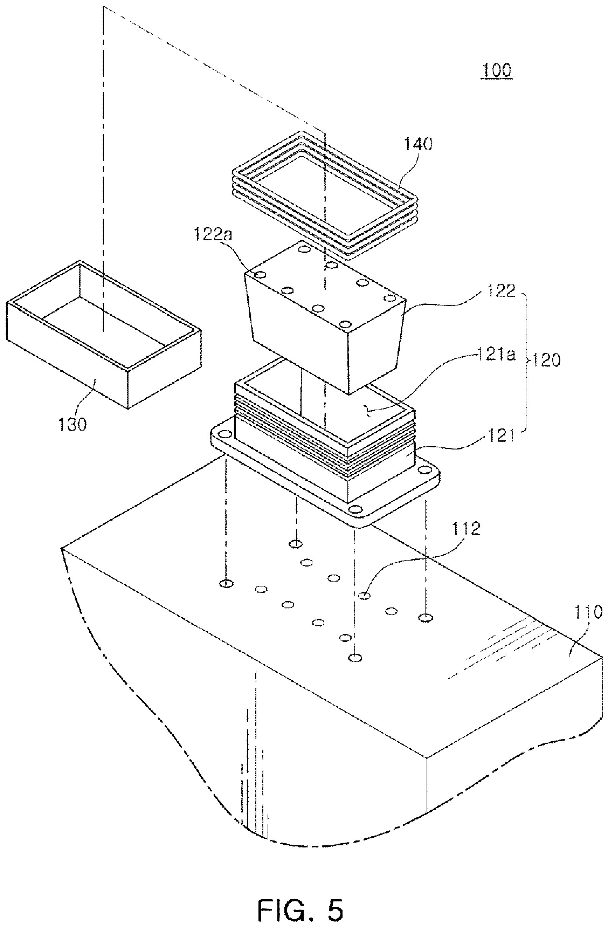

FIG. 3 is a partial perspective view illustrating an engine 10 for a ship including an axial vibration damper 100 according to an exemplary embodiment of the present disclosure. FIG. 4 is a partial cross-sectional view taken along line A-A' of FIG. 3. FIG. 5 is an exploded perspective view of the axial vibration damper 100 according to an exemplary embodiment of the present disclosure.

Referring to FIGS. 3 and 4, the engine for a ship according to an exemplary embodiment of the present disclosure may include a crank shaft 11 and the axial vibration damper 100.

The crank shaft 11 may have an annular cam portion 11a on an outer circumferential surface thereof.

The axial vibration damper 100 may be provided to allow the crank shaft 11 to penetrate therethrough. The camp portion 11a may be accommodated on an inner side of the axial vibration damper 100.

Referring to FIGS. 4 and 5, the axial vibration damper 100 according to an exemplary embodiment of the present disclosure may include a body unit 110 allowing the crank shaft 11 to penetrate therethrough, a lower frame 120 coupled to the top of the body unit 100, an upper cover 130 coupled to an upper end of the lower frame 120, and an oil seal 140 positioned between an outer surface of the lower frame 120 and an inner surface of the upper cover 130.

The body unit 110 may include a pair of oil chambers 111 disposed to be in contact with both sides of the cam portion 11a and allowing oil to be accommodated on an inner side thereof, and at least one communicating hole 112 formed on the top of the pair of oil chambers 111, respectively.

The at least one through hole 112 may be connected to cap communicating holes 122a (to be described below) and serve as a passage allowing oil filling the pair of oil chambers 111 to move between the pair of oil chambers 111.

The lower frame 120 may include a socket unit 121 including an installation portion 121a formed within the lower frame in a through manner and a core unit 122 installed in the installation portion 121a and coupled to an inner side of the socket 121. A cross-sectional area of the installation portion 121a may be formed to be upwardly increased, facilitating installation of the core unit 122 from the installation portion 121a.

The core unit 122 may include the cap communicating holes 122a corresponding to the at least one communicating holes 112 to form an oil movement path (or an oil flow path) together with the communicating hole 112. The at least one cap communicating holes 122a may be connected to the communicating holes 112 at a predetermined angle. Namely, the cap communicating holes 122a may diverge from one another outwardly in an upward direction. Accordingly, an oil communicating flow path 131 (to be described below) elongates to secure an oil movement path having sufficient length, increasing damping performance of the axial vibration damper 100.

A diameter of each of the cap communicating holes 122a may be smaller than that of each of the communicating holes 112, and a diameter of each of the cap communicating holes 122a may be equal to half the diameter of the communicating hole 112. Accordingly, damping performance of the axial vibration camper 100 may be increased, and in the case that the diameter of each of the cap communicating holes 122a is equal to half the diameter of each of the communicating holes 112, damping performance may be quadrupled.

Since the core unit 122 may be removed, various types of core units with the cap communicating holes 112a may be coupled to the socket unit 121 to adjust damping performance.

The upper cover 130 may be coupled to the top of the lower frame 120 and form the oil communicating flow path 131 connecting the cap communicating holes 122a between the upper cover 130 and an upper surface of the lower frame 120.

The communicating holes 122, the cap communicating holes 122a, and the oil communicating flow path 131 are a movement path along which oil charged in the pair of oil chambers 111 may move.

Although not shown, the upper cover 130 may move relatively with respect to the lower frame 120. In this case, the upper cover 130 may be connected to an upper cover controller (not shown) and move up and down.

The upper cover controller may include a solenoid valve and electrically connected to the upper cover 130, or may include a cylinder and connected to the upper cover 130 hydrodynamically.

A cross-sectional area and a gap of the oil movement path may be adjusted by moving the upper cover 130 outwardly or inwardly in a radial direction of the crank shaft 11.

The oil seal 140 may be provided between an outer surface of the lower frame 120 and an inner surface of the upper cover 130 and have an annular shape to surround the outer surface of the lower frame 120. A plurality of oil seals 140 may be provided, whereby the leakage of oil into a gap between the lower frame 120 and the upper cover 130 may be prevented.

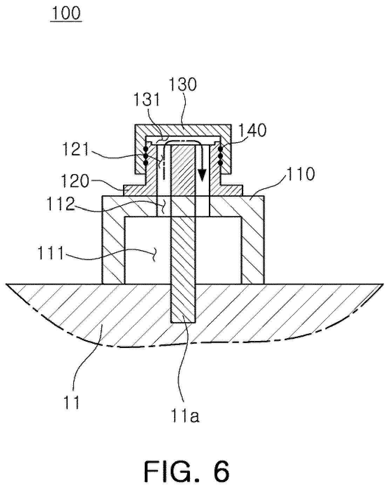

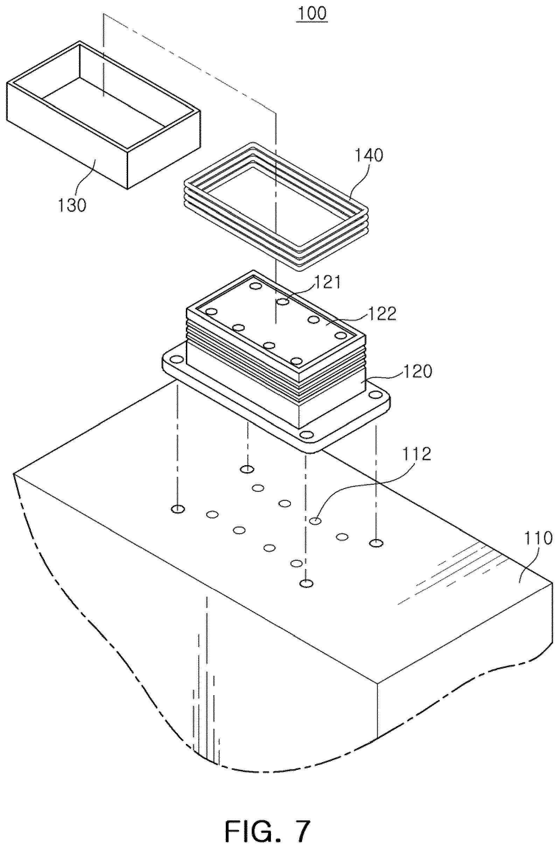

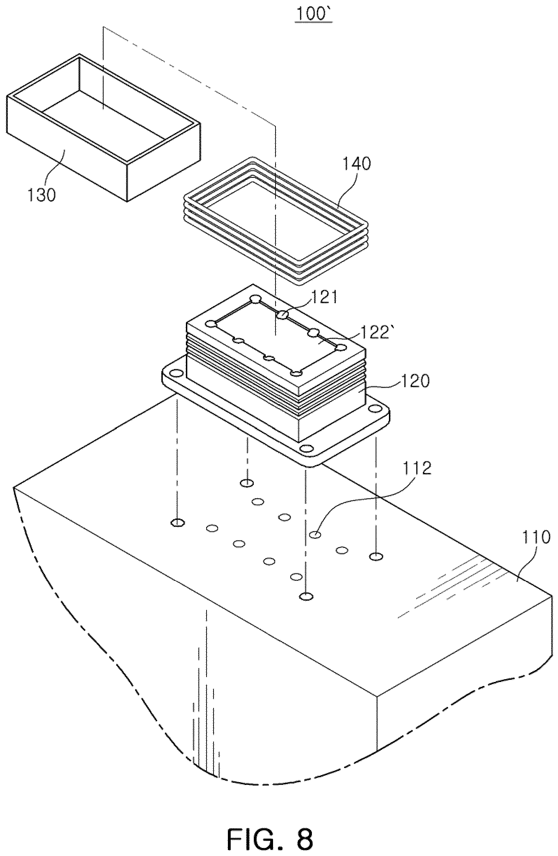

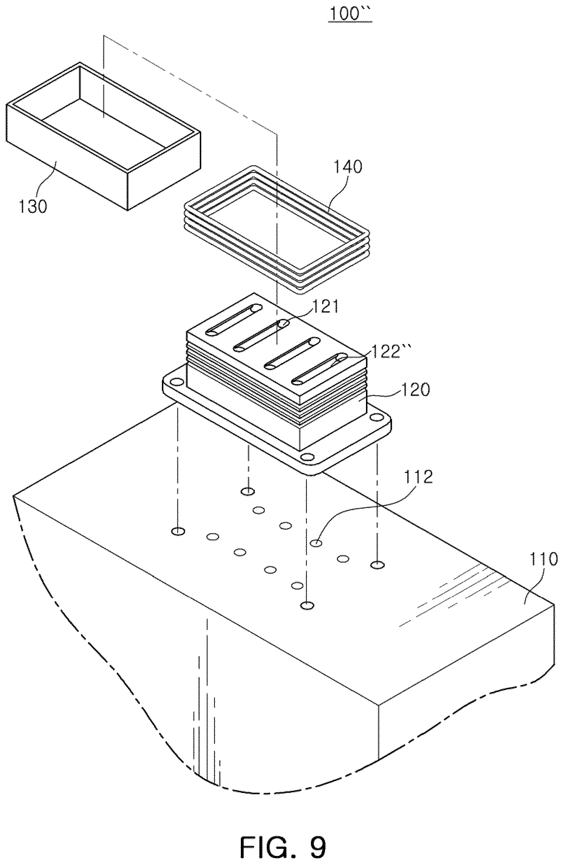

FIG. 6 is a partial cross-sectional view taken along line A-A' of FIG. 3 according to another exemplary embodiment of the present disclosure. FIG. 7 is an exploded perspective view illustrating an axial vibration damper according to another exemplary embodiment of the present disclosure. FIG. 8 is an exploded perspective view illustrating an axial vibration damper according to another exemplary embodiment of the present disclosure. FIG. 9 is an exploded perspective view illustrating an axial vibration damper according to another exemplary embodiment of the present disclosure.

Referring to FIGS. 6 through 9, an axial vibration damper 100 according to another exemplary embodiment of the present disclosure may include a body unit 110 allowing a crank shaft 11 to penetrate therethrough, a lower frame 120 coupled to the top of the body unit 100, an upper cover 130 coupled to an upper end of the lower frame 120, and an oil seal 140 positioned between an outer surface of the lower frame 120 and an inner surface of the upper cover 130. The axial vibration damper 100 according to the present exemplary embodiment of the present disclosure may have components identical to those of the axial vibration damper 100 illustrated in FIGS. 3 through 5, and only a configuration of the lower frame 120 is different.

Detailed descriptions of the same components the same as those disclosed in previous exemplary embodiments may be omitted to avoid redundancy in description.

In the axial vibration damper 100 according to another exemplary embodiment of the present disclosure, the lower frame 120 may have cap communicating holes 121 corresponding to communicating holes 112 to form an oil movement path together with the communicating hole 112. The lower frame 120 may have step portions 122, 122', and 122" formed to be depressed on the top thereof.

As illustrated in FIG. 7, the step portion 122 may include the entirety of the upper end of the cap communicating hole 121. Also, as illustrated in FIG. 8, a step portion 122' may include a portion of the upper end of the cap communicating hole 121. Also, as illustrated in FIG. 9, a plurality of step portions 122" may be dividedly formed and connect a pair of facing cap communicating holes 121 (or a plurality of step portions 122" each connecting a pair of facing cap communicating holes may be formed).

The step portions 122, 122', and 122" may prevent an oil movement path between the cap communicating holes 121 from being blocked or closed even in the case that a lower surface of the upper cover 130 is in contact with an upper surface of the lower frame 120.

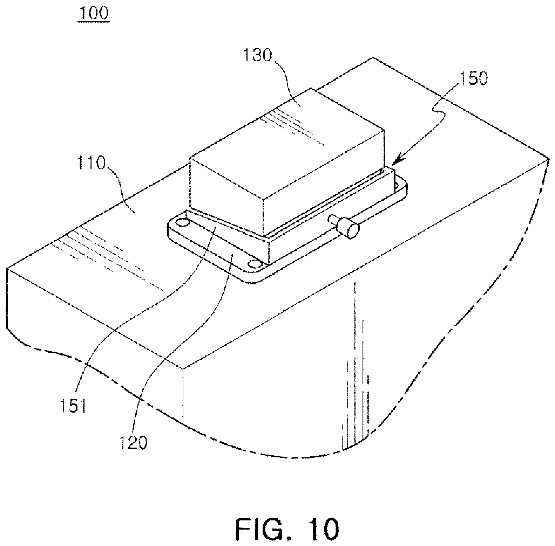

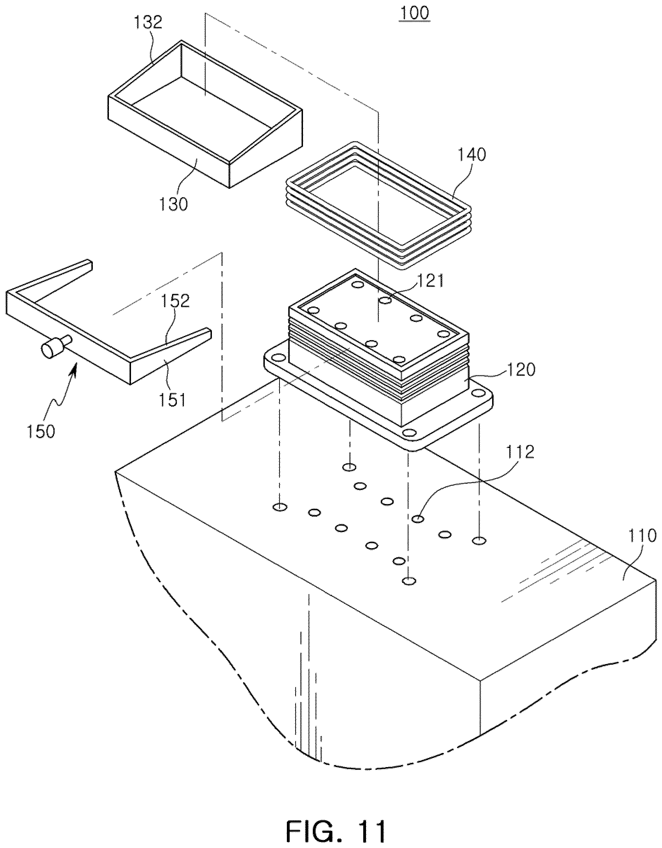

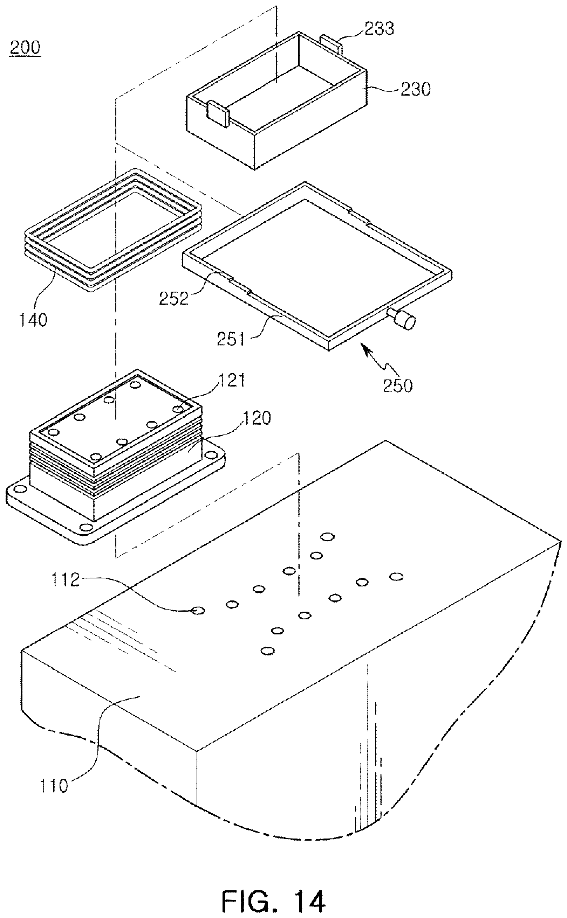

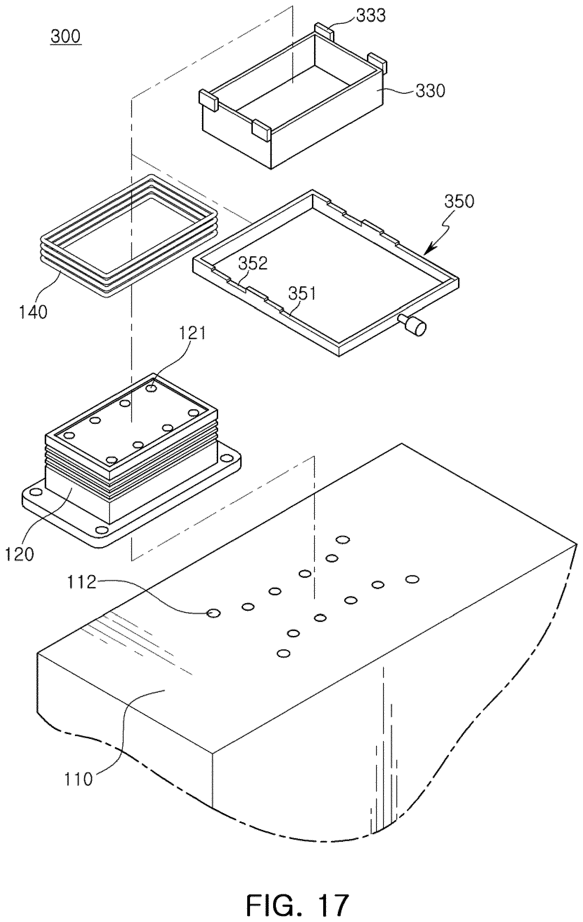

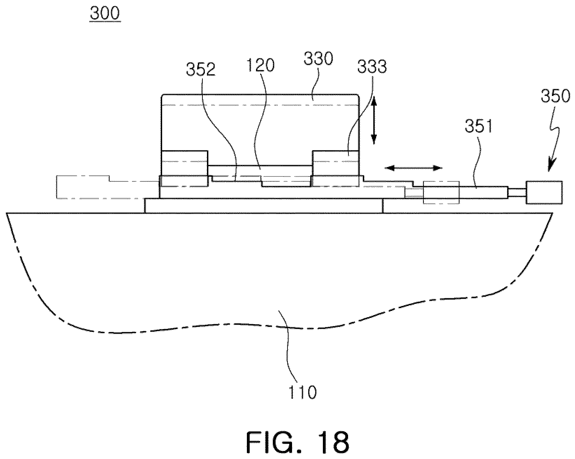

FIGS. 10 through 18 are views illustrating axial vibration dampers according to other exemplary embodiments of the present disclosure.

Referring to FIGS. 10 through 18, the axial vibration damper 100 according to an exemplary embodiment of the present disclosure may include a body unit 110 allowing a crank shaft 11 to penetrate therethrough, a lower frame 120 coupled to the top of the body unit 100, an upper cover 130 coupled to an upper end of the lower frame 120, and an oil seal 140 and a height adjusting members 150, 250, and 350 positioned between an outer surface of the lower frame 120 and inner surfaces of upper covers 130, 230, and 330, respectively.

The axial vibration damper 100 according to the present exemplary embodiment of the present disclosure may have components identical to those of the axial vibration dampers according to other exemplary embodiments of the present disclosure, and only configurations of the upper covers 130, 230, and 330 and the height adjusting members 150, 250, and 350 are different.

Detailed descriptions of the same components will be omitted to avoid redundancy in description.

Referring to FIGS. 10 through 12, in the axial vibration damper 100 according to the present exemplary embodiment of the present disclosure, the upper cover 130 may have a pair of first sloped surfaces 132 formed at a lower end of both facing side portions at a predetermined angle.

The pair of first sloped surfaces 132 may be in contact with second sloped surfaces 152 formed in the height adjusting member 150 (to be described below) and moved up and down according to a sliding movement of the height adjusting member 150. Accordingly, a cross-sectional area and a gap of the oil communicating flow path 131 may be adjusted. When a coupling height of the upper cover 130 is reduced to reduce a cross-sectional area and a gap of the oil movement flow path 131 are reduced, damping may be increased, and conversely, when a coupling height of the upper cover 130 is increased to increase the cross-sectional area and the gap of the oil communicating flow path 131, damping may be reduced.

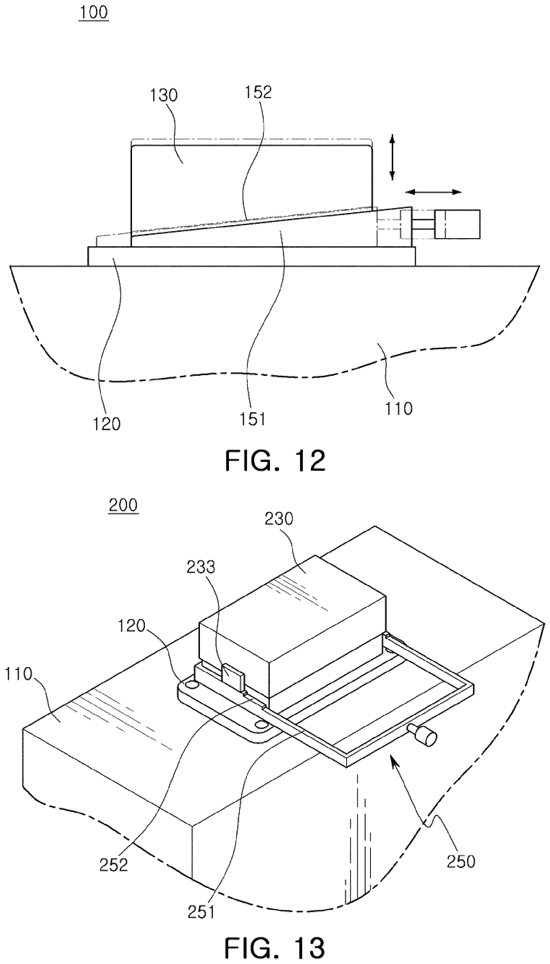

The height adjusting member 150 may a pair of height adjusting rods 151 with second sloped surfaces 152 corresponding to the pair of first sloped surfaces 132 of the upper cover 130. Accordingly, as illustrated in FIG. 12, when the height adjusting member 150 slidably moves, the upper cover 130 moves up and down, whereby a coupling height of the upper cover 130 may be adjusted, and accordingly, a cross-sectional area and a gap of the oil communicating flow path 131 may be adjusted.

Referring to FIGS. 13 through 15, the upper cover 230 may include at least a pair of height adjusting protrusions 233 downwardly protruded from a lower end portion of both facing sides of the upper cover 230. The pair of height adjusting protrusions 233 may be protruded outwardly from the sides of the upper cover 230.

The pair of height adjusting protrusions 233 may be in contact with upper surfaces of step portions 253 formed on the height adjusting ember 250 (to be described below) and adjust a height of the upper cover 230 according to a slidable movement of the height adjusting member 250. Accordingly, a cross-sectional area and a gap of the oil communicating flow path 131 may be adjusted.

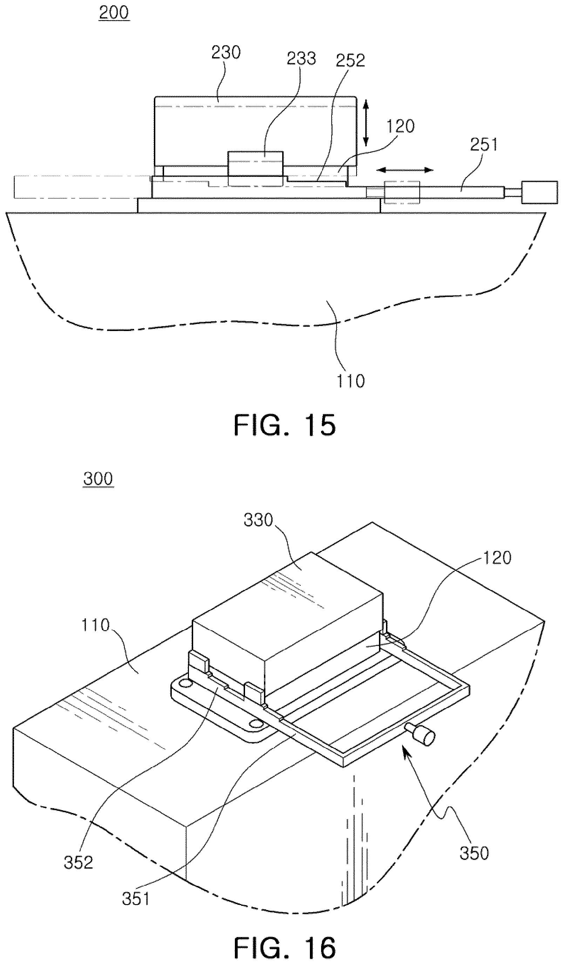

The height adjusting member 250 may have a pair of height adjusting rods 251 with the step portions 252 that be in contact with the pair of height adjusting protrusions 233 to adjust a coupling height of the upper cover 230. Accordingly, as illustrated in FIG. 15, a coupling height of the upper cover 230 may be adjusted by varying a height of the step portions 252 in contact with the pair of height adjusting protrusions 233 by sliding the height adjusting member 250, whereby a cross-sectional area and a gap of the oil communicating flow path 131 may be adjusted.

The step portions 252 are illustrated as having three steps, but the present disclosure is not limited thereto and the number of tiers of the step portions 252 may be determined as needed.

Referring to FIGS. 16 through 18, the upper cover 330 may include a plurality of pairs of height adjusting protrusions 333, and the height adjusting rods 351 of the height adjusting member 350 may include a plurality of step portions 351, respectively.

Accordingly, the upper cover 330 may be stably supported through at least four points.

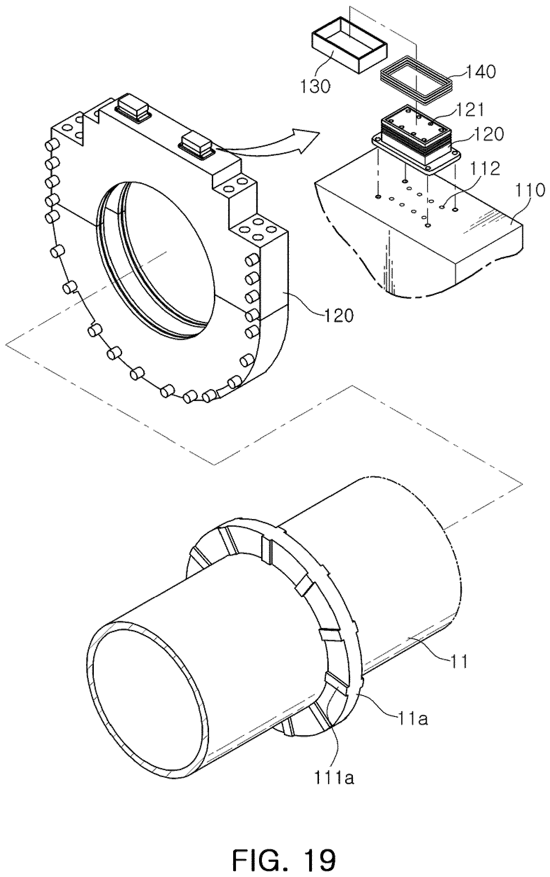

FIGS. 19 through 21 are views illustrating an axial vibration damper 100 according to other exemplary embodiments of the present disclosure.

Referring to FIGS. 19 through 21, the axial vibration damper 100 according to the present exemplary embodiment of the present disclosure may include a crank shaft 11, a body unit 110 allowing the crank shaft 11 to penetrate therethrough, a lower frame 120 coupled to the top of the body unit 100, an upper cover 130 coupled to an upper end of the lower frame 120, and an oil seal 140 positioned between an outer surface of the lower frame 120 and an inner surface of the upper cover 130.

The axial vibration damper 100 according to the present exemplary embodiment of the present disclosure may have components identical to those of the axial vibration damper 100 illustrated in FIGS. 3 through 5, and only a configuration of the crank shaft 11 is different.

Detailed descriptions of the same components will be omitted to avoid redundancy.

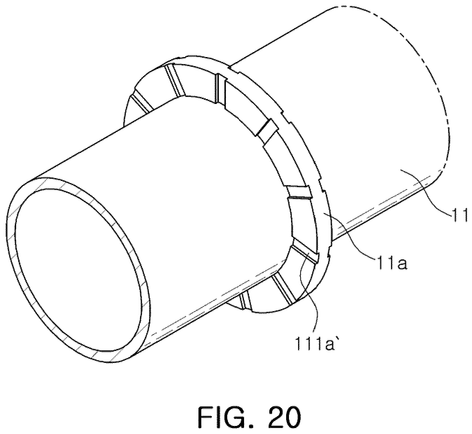

In the axial vibration damper 100 according to the present exemplary embodiment of the present disclosure, the crank shaft 11 may have an annular cam portion 11a on an outer circumferential surface thereof. The cap portion 11a may have a plurality of comb portions 111a formed in a circumferential direction on both sides thereof. As illustrated in FIG. 19, the comb portions 111a may be protrusions formed to be outwardly protruded. Also, as illustrated in FIG. 20, the comb portions 111a' may be inwardly recessed.

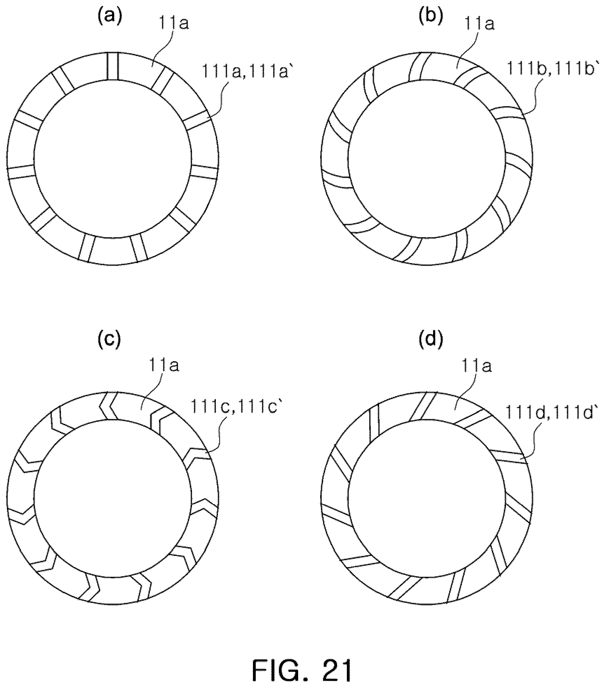

Referring to FIGS. 21(a) through 21(d), the comb portions 111a, 111a', 111b, 111b', 111c, 111c', 111d, 111d' may be radially formed and may have a helical, spiral, or herringbone shape.

The cam portion 11a may be housed in the body unit 10 and form an oil chamber 111 on both sides of the body unit 110. When the cam portion 11a rotates within the body unit 110, the comb portions 111a, 111a', 111b, 111b', 111c, 111c', 111d, and 111d' and oil filling the oil chamber 111 interact to increase torsion damping performance.

As set forth above, in the axial vibration damper and the engine for a ship including the same according to exemplary embodiments of the present disclosure, a height of the upper cover may be adjusted by the upper cover controller, whereby a cross-sectional area and a gap of the oil movement path may be easily adjusted.

In the axial vibration damper and the engine for a ship including the same according to exemplary embodiments of the present disclosure, since a height of the upper cover may be adjusted by sliding the height adjusting member, a cross-sectional area and a gap of the oil movement path may be easily adjusted.

In the axial vibration damper and the engine for a ship including the same according to exemplary embodiments of the present disclosure, damping performance of the axial vibration damper may be increased by increasing torsion damping performance.

While exemplary embodiments have been shown and described above, it will be apparent to those skilled in the art that modifications and variations could be made without departing from the scope of the present disclosure as defined by the appended claims.

## Claims

1. An axial vibration damper (100) comprising:
a body unit (110) allowing a crank shaft (11), of an engine (10) for a ship, having an annular cam portion (11a), to penetrate therethrough, and including a pair of oil chambers (111) in contact with both sides of the cam portion to accommodate oil therein and at least one communicating hole (112), respectively, formed at upper ends of the pair of oil chambers;
a lower frame (120) coupled to the top of the body unit and having cap communicating holes (122a) corresponding to the at least one communicating hole (112; and
an upper cover (130, 230) coupled to an upper end of the lower frame and forming an oil communicating flow path (131) together with the lower frame,
wherein the cap communicating holes (122a) are connected to the communicating hole (112) at a predetermined angle; **characterized in that**
the lower frame (120) comprises a socket unit (121) including an installation portion (121a) formed therein in a through manner and a core unit (122) having the cap communicating holes (122a) and installed on the installation portion (121a).

2. The axial vibration damper of claim 1, wherein a cross-sectional area of the installation portion (121a) is increased upwardly.

3. The axial vibration damper of claim 1, wherein a cross-sectional area of each of the cap communicating holes (122a) is smaller than a cross-sectional area of the at least one communicating hole (112).

4. The axial vibration damper of claim 1, wherein the lower frame (120) has a step portion (122, 122', 122'') formed to be depressed in an upper end of the lower frame.

5. The axial vibration damper of claim 4, wherein the step portion (122') includes at least a portion of upper ends of the cap communicating holes.

6. The axial vibration damper of claim 5, wherein a plurality of step portions (122'') each connecting a pair of facing cap communicating holes are formed.

7. The axial vibration damper of claim 1, wherein the upper cover (130) has a pair of first sloped surfaces (132) formed at lower ends of both facing sides thereof at a predetermined angle, and
the axial vibration damper further comprising a height adjusting member (150) having a pair of height adjusting rods (151) with second sloped surfaces (152) corresponding to the pair of first sloped surfaces and adjusting a coupling height of the upper cover through a slidable movement.

8. The axial vibration damper of claim 1, wherein the upper cover (230) has at least a pair of height adjusting protrusions (233) formed to be protruded downwardly at lower ends of both facing sides thereof, and
the axial vibration damper further comprising a height adjusting member (250, 350) having height adjusting rods (251) each with at least one step portion (252) that is in contact with the pair of height adjusting protrusions (233, 333) to adjust a coupling height of the upper cover through a slidable movement.

9. The axial vibration damper of claim 8, wherein the height adjusting protrusions (233) are outwardly protruded from the sides of the upper cover.

10. The axial vibration damper of claim 9, wherein the height adjusting protrusions (333) are formed as a plurality of pairs of height adjusting protrusions, and the height adjusting rods have a plurality of step portions (351) corresponding to the height adjusting protrusions.

11. The axial vibration damper of claim 1, wherein the crank shaft includes an annular cam portion with a plurality of comb portions (111a, 111a', 111b, 111b', 111c, 111c', 111d, 111d') formed in a circumferential direction on both sides thereof.

12. The axial vibration damper of claim 11, wherein the comb portions are outwardly protruded protrusions.

13. The axial vibration damper of claim 11, wherein the comb portions are inwardly depressed recesses.

14. The axial vibration damper of claim 11, wherein the comb portions are radially formed.

15. The axial vibration damper of claim 1, wherein the upper cover (130, 230) is movable outwardly or inwardly in a radial direction of the crank shaft (11) along the lower frame (120).

16. An engine for a ship, the engine comprising:
a crank shaft (11) rotating according to combustion of a heat engine and having an annular cam portion (11a); and
the axial vibration damper (100) according to any one of claims 1 to 15.

## Patentansprüche

1. Axialer Schwingungsdämpfer (100), umfassend:
einen Gehäusekörper (110), der es einer Kurbelwelle (11) eines Motors (10) für ein Schiff, die einen ringförmigen Nockenabschnitt (11a) aufweist, ermöglicht, durch ihn hindurchzudringen und der ein Paar Ölkammern (111), die mit beiden Seiten des Nockenabschnitts in Kontakt stehen, um Öl darin aufzunehmen, und mindestens ein Verbindungsloch (112), das jeweils an den oberen Enden des Paares von Ölkammern ausgebildet ist, beinhaltet; einen unteren Rahmen (120), der mit der Oberseite des Gehäusekörpers gekoppelt ist und Kappenverbindungslöcher (122a), entsprechend zu dem mindestens einen Verbindungsloch (112) aufweist;
und eine obere Abdeckung (130, 230), die mit einem oberen Ende des unteren Rahmens gekoppelt ist und zusammen mit dem unteren Rahmen einen Ölströmungskanal (131) bildet,
wobei die Kappenverbindungslöcher (122a) mit dem Verbindungsloch (112) in einem vorbestimmten Winkel verbunden sind; **dadurch gekennzeichnet, dass**
der untere Rahmen (120) eine Sockeleinheit (121) umfasst, die einen darin in einer durchdringenden Weise ausgebildeten Installationsabschnitt (121a) und eine Kerneinheit (122), die die Kappenverbindungslöcher (122a) aufweist und auf dem Installationsabschnitt (121a) installiert ist, beinhaltet.

2. Axialer Schwingungsdämpfer nach Anspruch 1, wobei eine Querschnittsfläche des Einbauabschnitts (121a) nach oben vergrößert ist.

3. Axialer Schwingungsdämpfer nach Anspruch 1, wobei eine Querschnittsfläche jedes der Kappenverbindungslöcher (122a) kleiner ist als eine Querschnittsfläche des mindestens einen Verbindungslochs (112).

4. Axialer Schwingungsdämpfer nach Anspruch 1, wobei der untere Rahmen (120) einen Stufenabschnitt (122, 122', 122") aufweist, der so ausgebildet ist, dass er in einem oberen Ende des unteren Rahmens niedergedrückt wird.

5. Axialer Schwingungsdämpfer nach Anspruch 4, wobei der Stufenabschnitt (122') mindestens einen Abschnitt der oberen Enden der Kappenverbindungslöcher beinhaltet.

6. Axialer Schwingungsdämpfer nach Anspruch 5, wobei eine Vielzahl von Stufenabschnitten (122"), die jeweils ein Paar von gegenüberliegenden Kappenverbindungslöchern verbinden, ausgebildet sind.

7. Axialer Schwingungsdämpfer nach Anspruch 1, wobei die obere Abdeckung (130) ein Paar erster geneigter Oberflächen (132) aufweist, die an den unteren Enden beider gegenüberliegenden Seiten derselben in einem vorbestimmten Winkel ausgebildet sind, und wobei der axiale Schwingungsdämpfer ferner ein Höhenverstellelement (150) mit einem Paar Höhenverstellstangen (151) umfasst, wobei zweite geneigte Oberflächen (152) mit dem Paar erster geneigter Oberflächen korrespondieren und eine Kupplungshöhe der oberen Abdeckung durch eine Gleitbewegung einstellen.

8. Axialer Schwingungsdämpfer nach Anspruch 1, wobei die obere Abdeckung (230) mindestens ein Paar Höheneinstellvorsprünge (233) aufweist, die so ausgebildet sind, dass sie an den unteren Enden der beiden einander zugewandten Seiten nach unten vorstehen, und
wobei der axiale Schwingungsdämpfer ferner ein Höhenverstellelement (250, 350) mit Höhenverstellstangen (251) mit jeweils mindestens einem Stufenabschnitt (252) umfasst, der mit dem Paar von Höheneinstellvorsprüngen (233, 333) in Kontakt steht, um eine Kupplungshöhe der oberen Abdeckung durch eine Gleitbewegung einzustellen.

9. Axialer Schwingungsdämpfer nach Anspruch 8, wobei Höheneinstellvorsprünge (233) von den Seiten der oberen Abdeckung nach außen vorstehen.

10. Axialer Schwingungsdämpfer nach Anspruch 9, wobei die Höheneinstellvorsprünge (333) als eine Vielzahl von Paaren von Höheneinstellvorsprüngen ausgebildet sind und die Höhenverstellstangen eine Vielzahl von Stufenabschnitten (351) aufweisen, die mit den Höheneinstellvorsprüngen korrespondieren.

11. Axialer Schwingungsdämpfer nach Anspruch 1, wobei die Kurbelwelle einen ringförmigen Nockenabschnitt mit einer Vielzahl von Kammabschnitten (111a, 111a', 111b, 111b', 111c, 111c', 111d, 111d'), die in einer Umfangsrichtung auf beiden Seiten davon ausgebildet sind, beinhaltet.

12. Axialer Schwingungsdämpfer nach Anspruch 11, wobei die Kammabschnitte nach außen vorstehende Vorsprünge sind.

13. Axialer Schwingungsdämpfer nach Anspruch 11, wobei die Kammabschnitte nach innen gedrückte Aussparungen sind.

14. Axialer Schwingungsdämpfer nach Anspruch 11, wobei die Kammabschnitte radial ausgebildet sind.

15. Axialer Schwingungsdämpfer nach Anspruch 1, wobei die obere Abdeckung (130, 230) nach außen oder innen in einer radialen Richtung zu der Kurbelwelle (11) entlang des unteren Rahmens (120) beweglich ist.

16. Motor für ein Schiff, wobei der Motor Folgendes umfasst: eine Kurbelwelle (11), die gemäß der Verbrennung eines Wärmemotors rotiert und einen ringförmigen Nockenabschnitt (11a) aufweist;
und den axialen Schwingungsdämpfer (100) nach einem der Ansprüche 1 bis 15.

## Revendications

1. Amortisseur de vibrations axiales (100) comprenant : une unité de corps (110) permettant à un vilebrequin (11), d'un moteur (10) destiné à un navire, ayant une partie de came annulaire (11a), de pénétrer à travers celui-ci, et comprenant une paire de chambres à huile (111) en contact avec les deux côtés de la partie de came pour y loger de l'huile et au moins un trou de communication (112), respectivement, formé à des extrémités supérieures de la paire de chambres à huile ;
un cadre inférieur (120) couplé à la partie supérieure de l'unité de corps et ayant des trous de communication de bouchon (122a) correspondant au au moins un trou de communication (112), et
un couvercle supérieur (130, 230) couplé à une extrémité supérieure du cadre inférieur et formant un trajet d'écoulement de communication d'huile (131) avec le cadre inférieur,
dans lequel les trous de communication de bouchon (122a) sont connectés au trou de communication (112) sur un angle prédéterminé; **caractérisé en ce que**
le cadre inférieur (120) comprend une unité de douille (121) comportant une partie d'installation (121a) formée en son sein de manière traversante et une unité centrale (122) ayant les trous de communication de bouchon (122a) et installée sur la partie d'installation (121a).

2. Amortisseur de vibrations axiales selon la revendication 1, dans lequel une aire de section transversale de la partie d'installation (121a) est augmentée vers le haut.

3. Amortisseur de vibrations axiales selon la revendication 1, dans lequel une aire de section transversale de chacun des trous de communication de bouchon (122a) est inférieure à une aire de section transversale du au moins un trou de communication (112).

4. Amortisseur de vibrations axiales selon la revendication 1, dans lequel le cadre inférieur (120) a une partie en gradin (122, 122', 122") formée pour être enfoncée dans une extrémité supérieure du cadre inférieur.

5. Amortisseur de vibrations axiales selon la revendication 4, dans lequel la partie en gradin (122 ') comprend au moins une partie d'extrémités supérieures des trous de communication de bouchon.

6. Amortisseur de vibrations axiales selon la revendication 5, dans lequel une pluralité de parties en gradin (122") reliant chacune une paire de trous de communication de bouchon se faisant face sont formées.

7. Amortisseur de vibrations axiales selon la revendication 1, dans lequel le couvercle supérieur (130) a une paire de premières surfaces inclinées (132) formées aux extrémités inférieures de ses deux côtés opposés selon un angle prédéterminé, et
l'amortisseur de vibrations axiales comprenant en outre un élément d'ajustement de hauteur (150) ayant une paire de tiges d'ajustement de hauteur (151) avec des secondes surfaces inclinées (152) correspondant à la paire de premières surfaces inclinées et ajustant une hauteur de couplage du couvercle supérieur par un mouvement coulissant.

8. Amortisseur de vibrations axiales selon la revendication 1, dans lequel le couvercle supérieur (230) a au moins une paire de saillies d'ajustement de hauteur (233) formées pour faire saillie vers le bas aux extrémités inférieures de ses deux côtés opposés, et
l'amortisseur de vibrations axiales comprenant en outre un élément d'ajustement de hauteur (250, 350) ayant des tiges d'ajustement de hauteur (251) ayant chacune au moins une partie en gradin (252) qui est en contact avec la paire de saillies d'ajustement de hauteur (233, 333) pour ajuster une hauteur de couplage du couvercle supérieur par un mouvement coulissant.

9. Amortisseur de vibrations axiales selon la revendication 8, dans lequel les saillies d'ajustement de hauteur (233) font saillie vers l'extérieur depuis les côtés du couvercle supérieur.

10. Amortisseur de vibrations axiales selon la revendication 9, dans lequel les saillies d'ajustement de hauteur (333) sont formées en une pluralité de paires de saillies d'ajustement de hauteur, et les tiges d'ajustement de hauteur ont une pluralité de parties en gradin (351) correspondant aux saillies d'ajustement de hauteur.

11. Amortisseur de vibrations axiales selon la revendication 1, dans lequel le vilebrequin comprend une partie de came annulaire avec une pluralité de parties de peigne (111a, 111a', 111b, 111b',111c, 111c', 111d, 111d') formées dans une direction circonférentielle des deux côtés de celle-ci.

12. Amortisseur de vibrations axiales selon la revendication 11, dans lequel les parties de peigne sont des saillies faisant saillie vers l'extérieur.

13. Amortisseur de vibrations axiales selon la revendication 11, dans lequel les parties de peigne sont des évidements enfoncés vers l'intérieur.

14. Amortisseur de vibrations axiales selon la revendication 11, dans lequel les parties de peigne sont formées radialement.

15. Amortisseur de vibrations axiales selon la revendication 1, dans lequel le couvercle supérieur (130, 230) est mobile vers l'extérieur ou vers l'intérieur dans une direction radiale du vilebrequin (11) le long du cadre inférieur (120).

16. Moteur destiné à un navire, le moteur comprenant : un vilebrequin (11) tournant selon la combustion d'un moteur thermique et ayant une partie de came annulaire (11a) ; et
l'amortisseur de vibrations axiales (100) selon l'une quelconque des revendications 1 à 15.
